# EUROPEAN PATENT APPLICATION

(11) **EP 2 317 110 A2**
(43) Date of publication of application: **04.05.2011**
(21) Application number: 10013819.7
(22) Date of filing: 20.10.2010
(51) Int. Cl.: F02M 25/07

(54) **Forced convection EGR cooling system**

(30) Priority: 02.11.2009 US 610549
(71) Applicant: International Engine Intellectual Property Company, LLC, Warrenville IL 60555 (US)
(72) Inventor: Morais, Jack, Arlington Heights, IL 60004 (US); Cagney, John L., Downers Grove, IL 60515 (US)
(74) Representative: Kuhnen & Wacker

(57) **Abstract**

A method of cooling recirculated exhaust gas from an exhaust manifold (27) of an engine (16) upstream of an intake manifold (29), the method including passing the recirculated exhaust gas from the exhaust manifold through a heat exchanger (36), and convectively forcing ambient air flow through the heat exchanger with at least one fan (58) attached to the heat exchanger. The method also includes the step of passing the cooled recirculated exhaust gas to the intake manifold (29).

## Description

### BACKGROUND

Embodiments described herein generally relate to exhaust gas conveyance systems in vehicles. More specifically, embodiments described herein relate to a forced convection heat exchanger for an exhaust gas recirculation (EGR) system of a vehicle for reducing the temperature of recirculated exhaust gases.

Exhaust gas conveyance systems on vehicles may emit exhaust gases with extremely high temperatures, which can be achieved from routine engine operation. The engine cooling system is used to cool the exhaust gas before the exhaust gas is recirculated to the engine. The engine cooling system typically circulates water or other coolant from the engine cooling system and carries the heat away from the exhaust gases. Due to regulations imposed on vehicles to control exhaust gas emissions, there are increasing demands made on the engine cooling system to cool the exhaust gas, which reduces nitrous oxide NOx exhaust gas emissions.

Exhaust gas coolers are located on an engine or on an exhaust gas passageway. The exhaust gas passageway routes the exhaust gases from the vehicle's engine to the ambient. A portion of the exhaust gases are recirculated from the engine exhaust manifold back to the intake manifold of the engine in an exhaust gas recirculation (EGR) system. Most EGR systems include at least one EGR cooler located between the exhaust manifold and the intake manifold of an engine.

NOx is primarily formed when a mix of nitrogen and oxygen is subjected to high temperatures. Intermixing incoming air with recirculated exhaust gas dilutes the mix, which lowers the flame temperature and reduces the amount of excess oxygen. The exhaust gas also increases the specific heat capacity of the mix of air and exhaust gas, which lowers the peak combustion temperature. Since NOx is more readily formed at high temperatures, the EGR system limits the generation of NOx by keeping the temperatures low. In general, the cooler the recirculated exhaust gas, the less NOx that is produced at the engine.

Engines using EGR to lower their NOx emissions can attain lower emissions by cooling the recirculated exhaust gas. The EGR coolers cool the exhaust gas so that the exhaust gas has a lower latent heat content. The cooled exhaust gas and air mixture lowers the combustion temperatures at the combustion chamber, which results in less NOx produced at the engine.

In the direction of flow of the exhaust gases, the exhaust gas conveyance system often incorporates aftertreatment devices, such as a pre-diesel oxidation catalyst member (PDOC) and a diesel oxidation catalyst (DOC) or a diesel particulate filter (DPF). A DOC is a device that uses a chemical process to break down pollutants in the exhaust stream into less harmful components. The DOC has a porous ceramic honeycomb-like structure that is coated with a material that catalyzes a chemical reaction to reduce pollution. The DPF removes particulate matter from the exhaust gases.

### SUMMARY OF THE INVENTION

A method of cooling recirculated exhaust gas from an exhaust manifold of an engine upstream of an intake manifold, the method including passing the recirculated exhaust gas from the exhaust manifold through a heat exchanger, and convectively forcing ambient air to flow through the heat exchanger with at least one fan attached to the heat exchanger. The method also includes the step of passing the cooled recirculated exhaust gas to the intake manifold.

### BRIEF DESCRIPTION OF THE DRAWINGS

FIG. 1 is a schematic of an exhaust gas recirculation system having a forced convection heat exchanger.

FIG. 2 is a front perspective view of the heat exchanger having a fan.

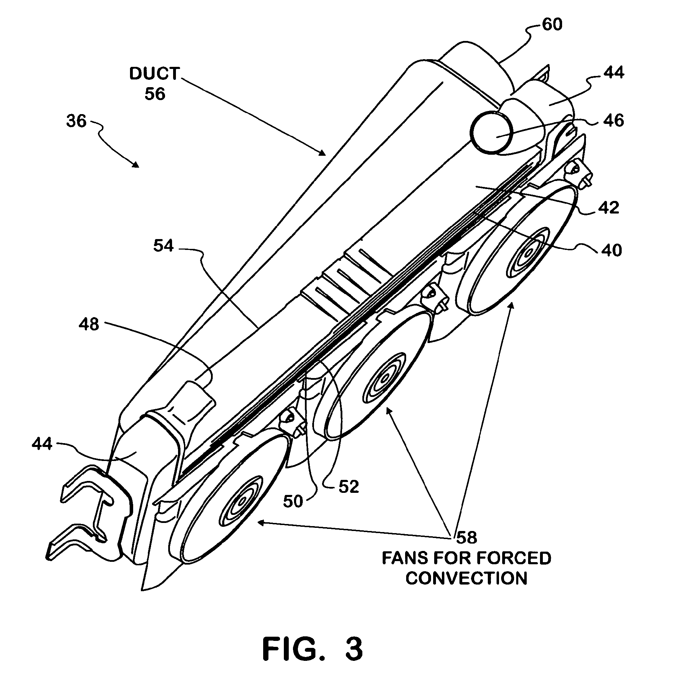

FIG. 3 is a rear perspective view of the heat exchanger having the fan.

### DETAILED DESCRIPTION

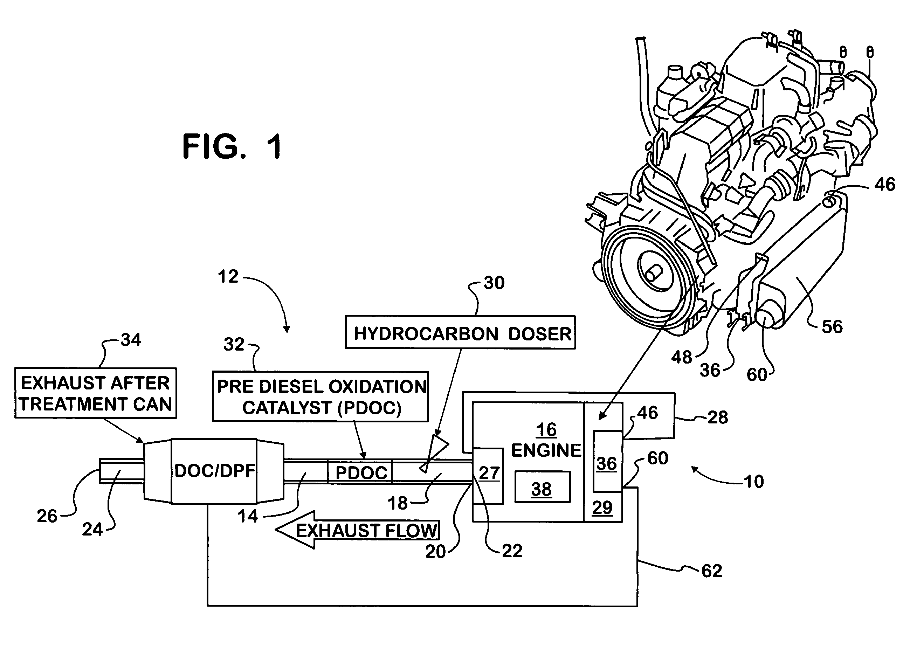

Referring now to FIG. 1, an exhaust gas recirculation (EGR) cooling system is depicted generally at 10, and is disposed on an exhaust gas recirculation system, depicted generally at 12. The EGR cooling system 10 is configured for cooling the exhaust gases and using the recovered waste heat from the exhaust gases for useful purposes. It is contemplated that the EGR cooling system 10 can be used with trucks, buses and any other vehicles.

The exhaust gas recirculation system 12 forms an exhaust gas passageway 14 for transferring gases emitted from an engine 16 to an ambient. The passageway 14 is formed with an exhaust inlet pipe 18, having an inlet 20 connected to an exhaust outlet 22 of the engine 16, and an exhaust outlet pipe 24, having an outlet 26 for venting the exhaust gases to the ambient. The EGR cooling system 10 cools exhaust gases from the exhaust gas recirculation system 12 before recirculating the exhaust gases into the intake manifold 29 of the engine 16, where they will flow to the combustion chamber (not shown).

The exhaust gas recirculation system 12 is preferably mounted on a chassis member (not shown) using conventional mounting structures (not shown). The exhaust gas recirculation system 12 generally extends longitudinally along the length of the vehicle.

In the direction of flow of the exhaust gases, the exhaust system 12 incorporates aftertreatment devices, and specifically, includes a pre-diesel oxidation catalyst member 32 and a diesel oxidation catalyst/diesel particulate filter (DOC/DPF) 34 downstream of the pre-oxidation catalyst on the exhaust gas passageway 14. A hydrocarbon doser 30 may also be disposed on the exhaust gas passageway upstream from the pre-diesel oxidation catalyst member 32. Exhaust gases are recirculated from an exhaust gas manifold 27 on the engine 16 on a recirculation line 28 to the intake manifold 29 of engine to intermix with air for combustion. The recirculation line 28 is in fluid communication with the exhaust gas manifold 27 and the intake manifold 29.

As is conventionally known, an engine cooling system 38 circulates water or other coolant through a series of channels cast into the engine block and cylinder head (not shown), surrounding the combustion chambers (not shown), to carry the heat away from the engine 16 through the vehicle body. In the conventional configuration, water or other coolant from the engine cooling system is circulated through an exhaust gas-to-coolant heat exchanger located at the engine 16 or on the exhaust gas passageway 14. This creates an additional loading on the engine cooling system 38.

The EGR cooling system 10 is intended to replace the conventional exhaust gas-to-coolant heat exchanger, or alternatively, is intended to be used in addition to the conventional exhaust gas-to-coolant heat exchanger to help alleviate the loading on the engine cooling system 38. Instead of using water or coolant from the engine's cooling system 38 as a heat transfer fluid, the present EGR cooler uses forced convection to cool the exhaust gas from the exhaust gas passageway 14. Specifically, the EGR cooling system 10 uses ambient airflow to cool the exhaust gas from the exhaust gas passageway 14.

The EGR cooling system 10 includes a forced convection, exhaust gas-to-air heat exchanger 36 in fluid communication with the engine 16. The heat exchanger 36 is disposed between and in fluid communication with the recirculation line 28 and the intake manifold 29 of the engine 16. In one embodiment, the heat exchanger 36 is attached directly to the intake manifold 29 of the engine 16 and is in fluid communication with the recirculation line 28.

The heat exchanger 36 is a forced convection cooler that includes a core assembly 40 having a plurality of tubes and fins running substantially the length of the heat exchanger. Bounding the periphery of the core assembly 40 are header members 42 running the length of the core assembly and parallel with the plurality of tubes and fins. Two end caps 44 are attached generally perpendicularly to the header members 42 to enclose the sides of the core assembly 40.

An exhaust gas inlet 46 is located at a first end cap 42 of the forced convection heat exchanger 36, and an exhaust gas outlet 48 is located at the opposite end cap 42. Exhaust gases exiting the recirculation line 28 and entering the exhaust gas inlet 46 flow into the end cap 42 and pass through the tubes of the core assembly. It is contemplated that within the tubes, there are turbulators (not shown) that are configured to turbulate the flow of exhaust gas through the tube to more effectively transfer heat. When the exhaust gases flow the length of the tubes, the exhausts gases flow out of the opposite end cap 42 and pass out of the exhaust gas outlet 48. When the exhaust gases exit the exhaust gas outlet 48, they are cooled relative to the temperature of the incoming exhaust gases at the exhaust gas inlet 46. These cooled exhaust gases flow or pass from the heat exchanger 36 into the intake manifold 29, and from the intake manifold to the combustion chamber (not shown) of the engine 16. In one embodiment, approximately 50 kW of heat is rejected from the exhaust gases prior to reaching the intake manifold 29.

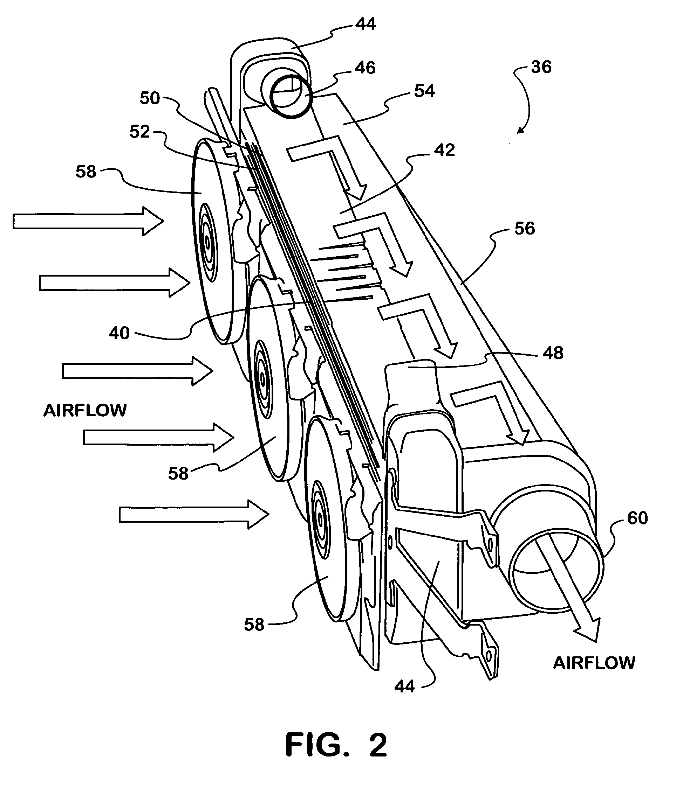

The forced convection heat exchanger 36 has a first side 50 having an airflow input surface 52 and a second side 54 with a duct 56 enclosing the second side. The air flows through the heat exchanger 36 in a direction indicated by the arrows in FIG. 2, which is transverse to the plane of the heat exchanger 36. As the air flows through the heat exchanger 36 transverse to the tubes and fins, the air cools the tubes and fins as well as the exhaust gases contained in the tubes.

At least one fan 58 is attached to the first side 50 to draw air into the airflow input surface 52. In one embodiment of the forced convection heat exchanger 36, there are three fans 58 attached to the airflow input surface 52 to substantially enclose the second side 54 of the heat exchanger. To more effectively draw air, the fans 58 are in a relatively sealed fluid communication with the heat exchanger 36.

The fans 58 convectively force the heated air over the heat exchanger 36 to be collected by the duct 56 and channeled to the DOC/DPF 34. In one embodiment, the energy required to operate the fan 58 would be in the range of 650 to 1000 Watts, however other amounts are contemplated.

The duct 56 is disposed at the second side 54 of the heat exchanger 36 to collect the heated airflow emitted from the heat exchanger 36 and to direct it out of a duct outlet 60. The duct outlet 60 is located at a first end of the duct 56, which has a larger cross-sectional area than the second end of the duct. The cross-sectional area decreases a generally constant amount along the length of the duct 56 to the second end of the duct. In this configuration, the majority of the heat gets ducted to a waste heat line 62 and directed to the DOC/DPF 34.

The heat exchanger 36 derives heat from the exhaust gases and uses this waste heat for other useful purposes. The waste heat line 62 provides the fluid communication between the airflow output 56 of the heat exchanger 36 to the DOC/DPF 34 and directs the flow of air to the DOC/DPF. The DOC/DPF 34 periodically goes through a regeneration cycle where deposits are burned off, which requires substantial heat energy. The waste heat from the heat exchanger 36 may provide additional heat to the DOC/DPF 34, which may reduce the build-up of deposits, and may reduce the number of regeneration cycles that are needed. Additionally, the waste heat from the forced convection heat exchanger 36 may provide heat (energy) to reduce the ramp up.

The EGR cooler 10 including the forced convection heat exchanger 36 alleviates the loading on the engine cooling system. In one embodiment, the heat exchanger 36 may provide the waste heat to the oxidation catalyst 32 for catalyst light off. Additionally, the EGR cooler 10 having the forced convection heat exchanger 36 is mounted on the chassis 28, which may provide an efficient packaging of the engine. Further, the waste heat from the forced convection heat exchanger 36 may provide more energy for temperature ramp up. Further still, the forced convection heat exchanger 36 may allow less dosing of the aftertreatment and may potentially reduce the size of the DOC/DPF 34.

## Claims

1. An exhaust gas cooling system on a vehicle having an exhaust gas passageway that emits exhaust gases from an engine to an outlet, the cooling system comprising:
a recirculation line in fluid communication with an exhaust manifold of the engine and an intake manifold of the engine;
a heat exchanger disposed between and located in fluid communication with the recirculation line and the intake manifold, the heat exchanger having an exhaust gas inlet and an exhaust gas outlet for circulating exhaust gas through the heat exchanger, a first side and a second side for permitting the flow of air through the heat exchanger and cooling the exhaust gases, and at least one fan for drawing the air into the heat exchanger, wherein the cooled exhaust gases from the exhaust gas outlet flow to the intake manifold of the engine.

2. The exhaust gas cooling system of claim 1 further comprising a diesel oxidation catalyst member located on the exhaust gas passageway, wherein the air flow through the heat exchanger is heated and flows out of the heat exchanger to the diesel oxidation catalyst member on a waste heat line.

3. The exhaust gas cooling system of claim 1 further comprising a diesel particulate filter located on the exhaust gas passageway, wherein the air flow through the heat exchanger is heated and flows out of the second side and is directed to the diesel particulate filter on a waste heat line.

4. The exhaust gas cooling system of claim 1 wherein the heat exchanger further comprises a core assembly having a plurality of tubes and fins running substantially the length of the heat exchanger.

5. The exhaust gas cooling system of claim 4 further comprising header members that run the length of the core assembly and that are parallel with the plurality of tubes and fins.

6. The exhaust gas cooling system of claim 5 further comprising two end caps that are attached generally perpendicularly to the header members on the sides of the core assembly.

7. The exhaust gas cooling system of claim 1 further comprising a pre-diesel particulate filter located on the exhaust gas passageway downstream of the engine.

8. The exhaust gas cooling system of claim 1 further comprising a dosing member located on the exhaust gas passageway downstream of the engine.

9. The exhaust gas cooling system of claim 1 further comprising a duct at the second side of the heat exchanger, wherein the air flow is collected in the duct having a first end with a first cross-sectional area and a second end with a second cross-sectional area.

10. The exhaust gas cooling system of claim 9 wherein the at least one fan comprises three fans that substantially enclose the second side.

11. The exhaust gas cooling system of claim 1 wherein the fan is an electric fan.

12. A heat exchanger for an exhaust gas recirculation system having an exhaust gas passageway that emits exhaust gases from an engine to an outlet, and an exhaust gas recirculation line in fluid communication with an exhaust gas manifold and an intake manifold of the engine, the heat exchanger comprising:
an exhaust gas inlet for receiving exhaust gas from the exhaust gas recirculation line;
an exhaust gas outlet for emitting exhaust gas to the intake manifold,
a first side for receiving a flow of air;
a second side for emitting a flow of air,
at least one fan for drawing the flow of air into the first side, wherein the flow of air is heated by reducing the heat of the exhaust gas.

13. The heat exchanger of claim 12 wherein the exhaust gas inlet is disposed on a first end cap and the exhaust gas outlet is disposed on a second end cap.

14. The heat exchanger of claim 12 further comprising a duct attached to the second side for receiving the flow of air emitted at the second side, the duct having a duct outlet.

15. The heat exchanger of claim 12 further comprising a waste heat line extending from the duct outlet.

16. The heat exchanger of claim 15 wherein the at least one fan comprises three fans.

17. The heat exchanger of claim 16 wherein the three fans substantially enclose the second side.

18. A method of cooling recirculated exhaust gas from an exhaust manifold of an engine upstream of an intake manifold, the method comprising:
passing the recirculated exhaust gas from the exhaust manifold through a heat exchanger,
convectively forcing air to flow through the heat exchanger with at least one fan attached to the heat exchanger; and
passing the cooled recirculated exhaust gas to the intake manifold.

19. The method of cooling recirculated exhaust gas of claim 18 including the step of collecting the heated air with a duct disposed on a side of the heat exchanger.

20. The method of cooling recirculated exhaust gas of claim 19 including the step of directing the flow of heated air from the duct to a diesel oxidation catalyst on an exhaust gas passageway.
